(19) Europäisches Patentamt
European Patent Office
Office européen des brevets

(11) **EP 4 036 844 A1**

(12) **EUROPEAN PATENT APPLICATION**

(43) Date of publication:
**03.08.2022 Bulletin 2022/31**

(21) Application number: **21382081.4**

(22) Date of filing: **01.02.2021**

(51) International Patent Classification (IPC):
***G06T 5/00*** *(2006.01)*

(52) Cooperative Patent Classification (CPC):
**G06T 11/60**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Jeanología, S.L.**
**46980 Paterna, Valencia (ES)**

(72) Inventors:
• **CARBONELL MADERN, Josep Maria**
**46980 Paterna, Valencia (ES)**
• **MIRA PAYA, Ricardo**
**46980 Paterna, Valencia (ES)**

(74) Representative: **González Poveda, Sara**
**INGENIAS**
**Creaciones, Signos e Invenciones S.L.**
**Avda. Diagonal 514, 1o 4a**
**08006 Barcelona (ES)**

(54) **METHODS, SYSTEM AND APPARATUS FOR GENERATING AN IMAGE FOR LASER MARKING**

(57)    A computer implemented method for generating an image of a graphic for laser marking, comprising: applying a color inversion on a working image of a textile garment, thereby generating an inverted image, the working image showing that the textile has a visible feature on its surface; applying a Gaussian filter on the inverted image, thereby generating a filtered image; combining the filtered image with the inverted image, thereby generating a combined image that comprises a graphic.

A data processing apparatus comprising means for carrying out the method. A computer program comprising instructions which, when the program is executed by a computer, cause the computer to carry out the method. A computer-readable data carrier having stored thereon the computer program. A system for laser marking, the system comprising a data processing apparatus that comprises means for carrying out the method.

FIG. 1

EP 4 036 844 A1

**Description**

Technical Field

The present invention relates to a computer implemented method for generating an image of a graphic for laser marking. The present invention also relates to a data processing apparatus comprising means for carrying out said method, and to a system having such an apparatus. The invention also relates to a computer program comprising instructions for carrying said method, and also to a computer-readable data carrier having stored thereon such a program. The present invention also relates to a method for generating an image of a graphic for laser marking.

Background

In the past, generating an image of a graphic for laser marking, particularly for laser marking of the graphic on a textile, has been a labor intensive process which requires the active manual intervention of a skilled worker. A specific type of image generation concerns the creation of an image of a graphic which when marked on the surface of a denim garment, for example on a new pair of jeans (trousers), will give to the viewer the impression that the jeans are aged and have worn out. These types of graphics are also known as wear patterns, and usually represent discoloration features and/or holes or various types of visible defects or damages on the garment. Accordingly, marking these graphics on the textile usually means changing the color of the fabric and/or drilling holes on the fabric and/or damaging the fibers of the textile. An environmentally friendly way for marking the graphic is by using a laser to mark the graphic on the textile, because laser marking in contrast to other alternatives such chemical etching or mechanical abrasion, is less labor intensive, and does not require the use of water and chemicals. Likewise, laser technology allows for accurate marking of fine details on the fabric.

Laser technology has brought a revolution on the marking of graphics, particularly on creating wear patterns on textiles, so that consumers and professionals can copy the wear pattern of a previous pair of jeans and reproduce it on a new pair of jeans. Accordingly, for executing said copying, specialized methods and software have been developed. The applicant for more than 10 years is being developing and commercializing software tools that allow consumers and professionals to identify features and wear patterns of interest on existing garments, and also allows them to create new patterns or graphics for laser marking on textile.

Patent document US 2018/0066395 A1 describes a technique that includes determining a fabric's response to a laser, capturing an initial image of a wear pattern on a garment, and processing the initial image, to obtain a working image in grayscale. US 2018/0066395 A1 describes further processing the working image to obtain a difference image by comparing each pixel relative to a dark reference, and converting the difference image to a laser values image by using the previously determined fabric in response to the laser. US 2018/0066395 A1 also describes that the working image may be processed to remove noise, and also describes that said working image may be subsequently used to create an inverted grayscale laser file. Regarding the aforementioned noise removal, US 2018/0066395 A1 describes a technique to detect the surface texture pattern and to subtract this surface texture pattern from the extracted image which has noise.

Considering the above, it can be concluded that the prior art does not offer a sufficiently simple and automated way from generating an image of a wear pattern for laser marking on a textile. In particular, previously described methods are complex, time consuming and require manual intervention of the user since they require steps such as applying a noise removal of the working image, detect the surface texture pattern for the purpose of applying a noise removal, and process said working image using a dark reference from the garment itself. For example, any of selecting the dark reference and detecting the surface texture pattern add complexity, require the need for the manual intervention of the user, rendering the method time consuming and prone to errors and bad choices made by the users during said manual interventions. The aboves are only some of the drawbacks that the present invention overcomes.

Summary of the Invention

An object of the present invention is to provide a computer implemented method for generating an image of a graphic for laser marking, particularly for laser marking the graphic on the surface of a work piece. In a non-limiting, yet preferable, example said work piece is a textile, more preferably a denim (fabric), most preferably a denim garment such as jeans. The computer implemented method is suitable for being executed rapidly and efficiently by an appropriately equipped for this purpose apparatus, e.g. a computer. Accordingly, the invention in its first aspect is a computer implemented method for generating an image of a graphic for laser marking, comprising: applying a color inversion on a working image of a textile garment, thereby generating an inverted image, the working image showing that the textile has a visible feature on its surface; applying a Gaussian filter on the inverted image, thereby generating a filtered image; combining the filtered image with the inverted image, thereby generating a combined image that comprises a graphic.

The present invention is remarkably simple and improved over the prior art, because the present method does not require complex and complicated steps such as applying a noise removal before inverting the working image. In contrast to the prior art that describes first applying a noise removal on an initial image, and then inverting the color of the filtered initial image, the present invention does not require applying said noise removal before the color inversion. Likewise, the present invention for the purpose of removing noise does not require to first detect a surface texture of a garment, nor requires to select in manual or automatic way a dark reference, nor requires comparing each pixel relative to a dark reference for generating a difference image.

One reason on why complex steps such as the ones mentioned in the prior art are not required in the present invention, is because the inventors have found that applying a Gaussian filtering on the inverted image works surprisingly well for removing unwanted features and noise interference, e.g. for removing noise caused by the textile's texture. This is unexpected because according to the prior art the noise from the textile garment must be removed before applying a color inversion, and also because according to the prior art said removal of the noise requires first determining the garment's texture. Likewise, the effect of the present invention is unexpected because the prior art describes that even when the texture-related noise has been removed from the original image, the method still requires further processing the image using a dark reference that must be determined in the image by the user. However, in the present invention the application of a Gaussian filter in the inverted image is sufficient for making obsolete both the pre-filtering of the image before the color invention, and the determination or use of a darkest reference within the image. Eliminating the need for applying the aforementioned steps, in turn allows for obtaining the required image with the graphic by simply combining the filtered image with the inverted image. Said combining also does not require additional complex steps executed by the user, such as finding a dark reference and using it for correcting the image pixel by pixel. Accordingly, preferably the present invention does not comprise finding and/or using a dark reference for correcting/changing the pixels of the digital or the inverted image.

With the present computer implemented method, which is simple and automatically executable by a computer, the obtained image that comprises the graphic is remarkably clean, providing in high quality the graphic to be marked by laser on the work-piece. None of the steps of the method requires the manual contribution of the user. Also, the method steps are executed quickly and efficiently. Therefore, the present invention allows for eliminating the human error factor, and for automating the image generation procedure, thereby offering a reliable and efficient way for generating the images. The methods provided in the prior are not suitable for being fully executed automatically by a computer because during their execution the manual input of the user is required. In contrast to the prior art, the present invention offers a truly computer implemented method. In turn, advantageously the present method offers streamlining capturing and processing patterns and graphics on existing textiles, for the purpose of reproducing, copying or further modifying said patterns.

The benefits offered by the present invention are particularly important in the denim industry where the customers, producers and retailers require easy and fast customization of garments according to the wearer's needs and preferences. Accordingly, in a preferred embodiment of the present invention, the visible feature is a wear pattern, the graphic resembles the visible feature, and the graphic is to be marked on a work piece that comprises denim. Likewise, in an embodiment the textile garment is a denim garment, because in this case the method's steps are particularly suitable for dealing with the problem of the noise caused by a denim's surface texture related to the denim's twill. Likewise, the method addresses the denim industry's needs for avoiding human errors during image generation.

In an embodiment of the method according to the invention, combining the filtered image with the inverted image comprises applying a mathematical formula for calculating a value $f(A,B)$ of a color channel of the combined image, said formula being:

$$f(A,B) = \begin{cases} 2AB + A^2(1-2B), & if\ B < c \\ 2A(1-B) + \sqrt{A}(2B-1), & if\ B \geq c \end{cases}$$

wherein $c$ has a value of between a maximum value $c_{max}$ and a minimum value $c_{min}$, where $c_{max}$ defines a white color in the grayscale and $c_{min}$ defines a black color in the grayscale, $c$ preferably being $c_{max}/2$, $A$ is a value of a color channel of the inverted image and $B$ is a value of the corresponding color channel of the filtered image. $A$ may be a pixel of the inverted image and $B$ may be a corresponding pixel of the filtered image. Therefore, $A$ and $B$ may be pixels referring to (having) the same pixel coordinates, albeit $A$ and $B$ are in different images. The formula above can be used for every pixel of the image. Combining the filtered and the inverted image in accordance to the aforementioned formula has the technical effect that in the final image, the features of the graphic to be marked using laser are well distinguishable and shown clearly and in a particularly enhanced and aesthetically pleasing manner. Most importantly, it is achieved that within the obtained image and graphic the color/shade variations are correct and proper such that when the graphic is scribed on a work piece, particularly on a denim garment, it can be visually perceived as having depth and as having being created naturally. These are important qualities when the desired end result is to create a laser marked denim that has a vintage look.

For the purpose of further improving the quality of the combined image in terms of how clear and well distinguishable the graphic's important features are in the combined image, in a preferred embodiment combining the filtered image with the inverted image comprises calculating a value $f(A,B)$ of a color channel of a pixel of the combined image, and said calculation comprises applying the formula $f(a,b)=d$ if $A$ does not meet a condition, where $f(A,B)$ is a function of $A$, $A$ is a value of a color channel of the inverted image's pixel that corresponds to said combined image's pixel, $d$ is a value in the grayscale, preferably d being equal to $A$. Likewise, this preferred embodiment may comprise checking whether $A$ meets said condition. An effect in said preferred embodiment is that the colors of the pixels that correspond to areas close to or outside the border of the textile garment are automatically corrected or set to be neutral such that it is further achieved that the borders of the graphic are correct, and that the graphic optimally represents the correct visible features on the textile' garments surface. For example, this way it can be further ensured that the border of the garment is not to be confused with a wear pattern within the textile garment. In a non-limiting example of such an embodiment, said condition may be that $A$ exceeds, or is equal to, or is smaller than a threshold color value that preferably may be predetermined such that the color of pixels that do not meet said condition may be set to be equal to $d$. The value $d$ may be predetermined to be a constant, or may be set to depend on A. Preferably the value $d$ may be equal to the value $A$, i.e. $d=A$, and in that optional case $f(A,B)$ would be equal to $A$ if $A$ does not meet a condition. The latter's result is that the combined image's pixels that correspond to any inverted image's pixels that do not meet the condition, may be respectively assigned with the color(s) of said inverted image's pixels. As can be understood, if $A$ does not meet the aforementioned conditioned, it may be simply because $A$ meets another condition that is mutually exclusive with respect to the former (mentioned above) condition. The color value of a pixel may be a value in the grayscale, preferably a value of between 0 and 255.

In a preferred embodiment of the method of the first aspect of the invention, applying a Gaussian filter on the inverted image comprises: rescaling the inverted image by applying a downscaling algorithm, thereby generating an intermediate image of reduced size compared to the inverted image; applying the Gaussian filter on the intermediate image, thereby generating an intermediate filtered image; rescaling the intermediate filtered image by applying an upscaling algorithm, thereby generating the filtered image, the latter having a size that is equal to the size of the inverted image. Therefore, optionally applying the Gaussian filter comprises first downscaling the inverted image, then applying the Gaussian filter on the downscaled inverted image, and then upscaling the downscaled version on which the Gaussian filter has been applied. As can be readily understood by the skilled person, alternatively said rescaling of the inverted image can be considered as being comprised by the step of generating an inverted image, in which case the other step of applying the Gaussian filter would comprise applying said filter on a downscaled inverted image and subsequently upscaling the downscale image on which the Gaussian filter has been applied. In these preferred cases, the aforementioned optional steps of 1) downscaling, 2) applying the Gaussian filter, 3) upscaling, in combination have the effect of making the method faster and more efficient, due to the reduced size of the image on which the Gaussian digital filter is applied. Further preferably, said downscaling algorithm is an interpolation algorithm so that it is avoided having the formation of resizing artifacts, such as Moire effect(s), in the downscaled image. Likewise, further preferably said upscaling algorithm is a bicubic algorithm so that it is avoided having any significant loss of image quality.

In the method according to the first aspect of the invention, the working image of the textile garment may have been provided and be readily available, or may optionally be generated in an optional additional step of the method. Accordingly, in a preferred embodiment, the method of the first aspect of the invention, before applying the color inversion to the working image, comprises any of: converting a digital image of the textile garment, into the working image, the digital image, which can also be called initial or principal image, showing that the textile has the visible feature on its surface; and/or combining a plurality of digital partial images of the textile garment, thereby generating the working image or the digital (initial) image of the textile garment. As it is obvious, the working image is also digital. Preferably, the working image is a grayscale image. Advantageously, working with grayscale images facilitates the graphic processing for laser scribing. Nevertheless, the working image or the digital (initial) image or the partial images may also be colored, in any of the commonly used color scales. Particularly, in a preferable yet optional case, the digital (initial image) may be colored, and may be used for generating a grayscale image that is the working image.

Each of said partial images of the textile garment may show different parts of the garment. In a non-limiting example, the garment is a pair of trousers made of denim, and a first of said partial images shows a garment area close to the bottom hem of the garment, a second partial image shows a part of the garment above said bottom hem and at the knee area destined for the knee of the user, and a third image partial image shows the rise part of the denim above said knee area. In the same example, when the first, second and third image are combined by being appropriately collaged together one next to the other, show one side of a full panel of the denim. Combining the partial images may improve the quality of the final digital or working image because partial images of a garment may be provided at high resolution such that an image resulting from combining said images may show a large part of the garment at high resolution. This is particularly useful for capturing high resolution images of the textile garment by scanning the garment using a relatively small scanner such as desktop scanner. Usually, a scanner cannot capture at once the entire front or back surface of the garment, and so the garment has to be scanned part-by-part for obtaining a series of partial images. Therefore, advantageously the computer implemented method of the first aspect of the invention comprises combining a plurality of digital partial images of the textile garment, thereby generating the digital image of the textile garment.

A preferred way for implementing, said optional combining of partial images is structured in six sequential steps that pre-process the images to achieve better results, as follows:

a) In the first step, a set of characteristic points is searched in the images that will be joined in next steps. These points preferably are in the borders of the garment in said images because inner points would not be useful.

b) Once these points are obtained/determined, in the second step possible pairs of points or of partial images are searched. In this way, a first approximation of how images should preferably be joined is established. It is possible that joins cannot not yet be established because some points can be associated with more than one pairs.

c) At this point, in the third step an estimate of how images should preferably be joined, may be made. One of the images is fixed and isometric transformations to at least one of the other images may be applied to find the best join for the fixed image and the other image on which the isometric transformation is applied, wherein said transformations do not modify the image(s) on which they are applied, except possibly causing a scaling and/or rotation and/or moving of the image.

d) Once said estimate in the third step is made, in a fourth step, the actions of the third step are repeated one or more times, wherein in each time a different one of the partial images is being fixed, and in each time isometric transformations are applied to find the best join for the image that is fixed each time.

e) In the fifth step, the colors of parts or of pixels at the estimated joins is being changed, to obtain smooth joins such that seams related to images (found between the partial images) once the images are blended in the next step (found between the partial images) will not be visible.

f) And finally in the sixth step, the images are blended thereby creating a single final image, advantageously making the joins between images practically imperceptible, giving the user a sense of continuity.

According to the above, in an embodiment the method of the first aspect of the invention comprises the steps of: searching for a set of characteristic points in a set of partial images that show parts of a garment; establishing possible pairs of said points; having one of the partial images fixed and applying isometric transformation to at least one of the other partial images, to find the best join for the fixed partial image, wherein said transformations do not modify the image(s) on which they are applied, except possibly causing a scaling and/or rotation of the image(s); repeating the previous step one or more times, in each time having a different one of the partial images fixed, and in each time applying the aforementioned isometric transformations to find the best join for the image, that is fixed each time, wherein said transformations do not modify the image(s) on which they are applied, except possibly causing a scaling and/or rotation and/or moving of the image(s); changing the color of one or more pixels at the estimated joins, to obtain smooth joins such that seams are not visible when combining the images; blending the partial images together, thereby generating a digital image of a textile garment.

It may be required to isolate the graphic from the rest of the combined image which results from combining the inverted image and the filtered image. Accordingly, in a preferred embodiment the method of the first aspect of the invention further comprises cropping the combined image to remove parts that do not represent the graphic, thereby generating an improved image that comprises the graphic. Likewise, there may be the case that in the combined image there may be parts or pixels that do not correspond to the graphic but rather show other elements, particularly the borders of the garment or the background. For this reason, preferably the method may further comprise determining that at least one pixel of the combined image does not meet a specific condition that is met by other pixels; and separating from the rest of combined image said pixel that does not meet the specific condition, or changing the value of a color channel of said pixel that does not meet the specific condition, thereby generating an improved image that comprises the graphic. Changing a color channel of a pixel may be changing the color of the pixel. Separating a pixel or an image part from the rest of the image may be cropping the image. According to the above, the improved image may be a cropped version of the combined image, and has (shows) the graphic.

The invention in its second aspects concerns a data processing apparatus comprising means for carrying out the method of the first aspect of the invention. Said means may be a computer or a set of computers. The apparatus may be a network of computers. Accordingly, the method of the first aspect of the invention may be performed on a single computer, or a network of computers. Likewise, the method may be implemented in a computer locally, or remotely in a computer or server connected and sharing data with another computer. Likewise, part of the method may be implemented in a local computer and part of the method may be implemented in another computer connected to the local computer. The apparatus that comprises the data processing means may be any kind of known computer system or device such as a personal computer, a smartphone, a tablet, a server etc. As is known, the data processing means may comprise a memory storage, processor (logic), etc. The computer may have one of the known operating systems. When the method is implemented using multiple computers, the latter may be interconnected by appropriate connections, and in one example, via the internet.

The invention in its third aspect concerns a computer program comprising instructions which, when the program is executed by a computer, cause the computer to carry out the method according to the first aspect of the invention. The computer may be the data processing apparatus of the second aspect of the invention. The computer program may be written in any of the known computer programming languages. Some non-limiting examples of programming languages that can be used are Python, C, etc.

The invention in a fourth aspect concerns a computer-readable data carrier having stored thereon the computer program of the third aspect of the invention. Said carrier, which may be considered as a computer readable (storage) medium, can be one of the standard types, with non-limiting examples being a hard drive, an optical disc, a portable usb stick, a flash memory card etc. Said carrier may be a stand-alone carrier, or be embedded within a computer device, or be connected to computer device.

The invention in a fourth aspect concerns a system for laser marking a graphic on a work piece, the system comprising a data processing apparatus that comprises means for carrying out the method of the first aspect of the invention. As is known, systems for laser marking comprise one more lasers for marking on a work-piece of interest. In the context of the present invention marking may be any of scribing, burning, drilling, etching and combinations thereon, such that at least one feature is created (being marked) on the work-piece. The graphic may comprise a drawing, a pattern, a text characters and combinations thereon. The work piece preferably comprises a textile material, and more preferably is a garment, particularly a denim garment.

It is important to say that the steps of generating the working image or converting a digital image to a working image are not always required and therefore are not essential, particularly when the working image of the garment is readily available, or is being provided. This can for example happen when capturing directly a working image of the garment. Therefore, it is contemplated that the aforementioned optional and preferable step of converting the (initial) digital image of the garment into the working image, is not an essential step of the method.

While the method of the first aspect of the invention is computer implemented, there is contemplated that the invention in a fifth aspect concerns a method for generating a graphic for laser marking, comprising: applying a color inversion on a working image of a textile garment, thereby generating an inverted image, the working image showing that the textile has a visible feature on its surface; applying a Gaussian filter on the inverted image, thereby generating a filtered image; combining the filtered image with the inverted image, thereby generating a combined image that comprises a graphic. The method according to the fifth aspect differs from the method of first aspect in that in one or more method steps the user provides a manual input such as manually controlling the step of combining the filtered image with the inverted image. Although such a method that is not fully computer implemented is less preferable compared to the computer implemented aspect of the invention, it may be advantageous in certain cases such as when a very high degree of graphic/image customization is required. Therefore, any of the options and preferred features described above for the computer implemented method, may also be considered as being preferred options and preferred features of the method of the fifth aspect of the invention.

Brief Description of Drawings

FIG. 1 shows different images related to the flow of an embodiment of the method according to the first aspect of the invention, wherein said images show a side of a denim.

FIG.2 is a flow diagram of an embodiment of a method according to the first aspect of the invention.

FIG. 3 shows a flow diagram of a part of an embodiment of a method according to the first aspect of the invention.

FIG.4 is a flow diagram of an embodiment of a method according to the first aspect of the invention.

FIG. 5 is a digital image of a textile garment.

FIG. 6 is a digital image of another textile garment.

FIG. 7 is a flow diagram of an embodiment of a method according to the first aspect of the invention.

Detailed Description of the invention

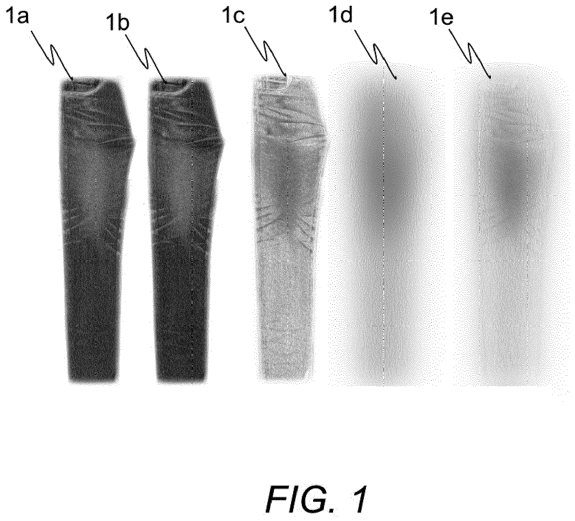

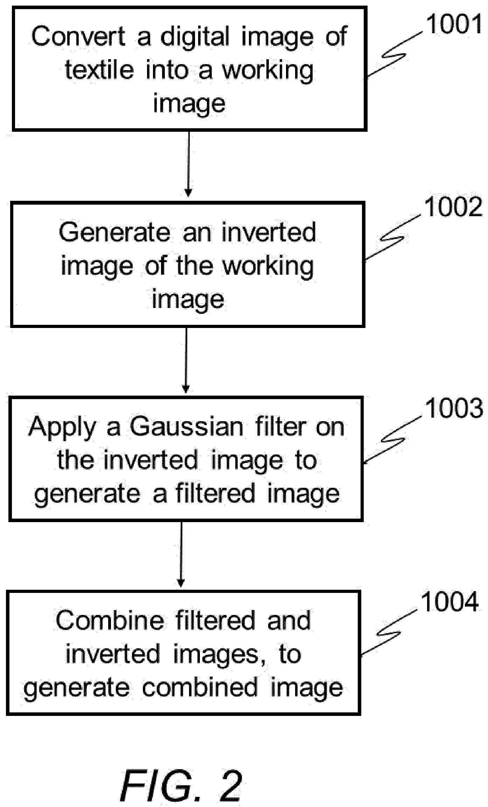

With reference to FIG.1 and FIG. 2, a preferred embodiment of the computer implemented method according to the invention comprises:

- in step 1001 converting a digital image 1a of a textile into a working image 1b;
- in step 1002 generating an inverted image 1c of the working image 1b;
- in step 1003 applying a Gaussian filter on the inverted image 1c to generate a filtered image 1d;
- In step 1004 combine the filtered image 1d with the inverted image 1c to generate a combined image 1e.

Step 1001 shown in FIG. 2 is an optional step and is not always required. In the embodiment described in FIG. 1 and FIG. 2 the digital image 1a is in color scale, and the working image 1b is in grayscale. In other embodiment the working image is colored in other color scales. A result of applying the embodiment described in FIG.2 for the case of the garment shown in FIG. 1 is that the white(ish) wear pattern that is visible in the jeans as shown in the digital image 1a, in the combined image appears as a dark pattern in white(ish) background. The shades in wear the pattern in the combined image 1e may contribute to having a graphic that when is marked on another jean will give to the viewer the impression that the graphic has been created naturally due to normal aging/wearing of the garment.

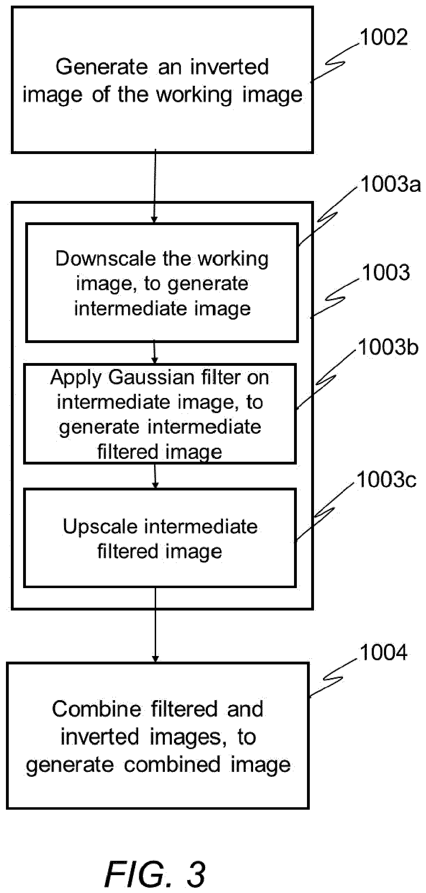

Referring to FIG. 3, in a preferred embodiment of the method, after generating an inverted image of the working image in step 1002, then step 1003 that concerns applying a Gaussian filter on the inverted image, comprises:

- in step 1003a downscaling the working image, to generate an intermediate image;
- in step 1003b applying a Gaussian filter on the intermediate, to generate an intermediate filtered image;
- in step 1003c upscaling the intermediate filtered image, to generate the filtered image.

Subsequently in step 1004 the filtered image is combined with the inverted image, to generate the combined image as is also indicated in FIG. 3. It can be noted that as is obvious, the Gaussian filter is a digital Gaussian filter.

In an exemplary embodiment that also comprises the steps shown in Fig. 3, to make the process more efficient, in step 1003a the inverted image is being rescaled (smaller) with an interpolation algorithm to avoid the moire effect; in step 1003b the Gaussian filter is applied to the rescaled image; to calculate the Kernel of the Gaussian filter the procedure may be based on the following considerations:

Img = Original image.
ImgR = Image rescaled (smaller).
KernelSize X axis = Upper Integer [(280000 * Img.Dimension.x) /ImgR.Dimension.x]
KernelSize Y axis = Upper Integer [(280000 * Img.Dimension.y) /ImgR.Dimension.y]

Finally, in the exemplary embodiment the image that is obtained from applying the Gaussian filter, in step 1003c is rescaled to the original image size with a bicubic rescaling to maintain quality.

In the exemplary embodiment, an algorithm for the Gaussian filter application is according to the equation:

$$G(x,y) = \frac{1}{2\pi\sigma^2} e^{-\frac{x^2+y^2}{2\sigma^2}}$$

where

$$\sigma = 0.3 * ((KernelSize - 1) * 0.5 - 1) + 0.8).$$

In said exemplary embodiment in step 1004, assuming that:

- Im3 = pixel in the inverted pixel,
- Im4 = pixel in the filtered image (Im4 and Im3 are pixels of the same coordinates), then combining the inverted and the filtered images, is implemented according to (using) the following formula:

$$Im5(Im3, Im4) = \begin{cases} 2Im3 * Im4 + Im3^2 * (1 - 2Im4) & if\ Im4 < 0.5 \\ 2Im3(1 - Im4) + \sqrt{Im3} * (2Im4 - 1) & if\ Im4 \geq 0.5 \end{cases}$$

The result is the combined image that comprises the graphic and advantageously has an increased contrast. Having an image of good/high contrast facilitates the laser marking process. The exemplary embodiment also comprises an additional optional step of the method that is: the combined image's pixels that do not correspond to the design information, such as pixels that correspond to the background, are being cut out (eliminated), thereby obtaining an improved image or electronic (computer) file of the graphic that is usable in the laser system.

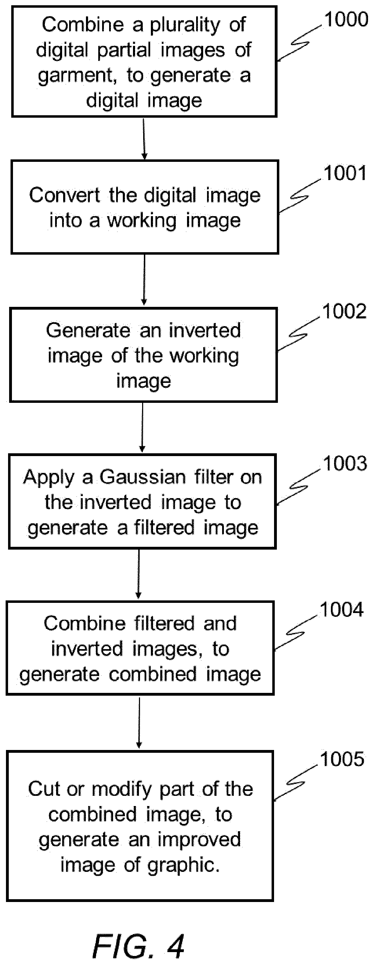

In a preferred embodiment, the method according of the invention comprises the steps shown in FIG. 2, but also comprises additional steps. Specifically, as shown in FIG. 4 before the step 1001 of using the digital image for generating the inverted image, in a preferred embodiment there is the step 1000 in which a plurality of a digital partial images of the garment are being combined, to generate the digital image. Said partial images show different parts of a surface of the garment, and these images in combination show all of said surface. Said surface may correspond to a front or a back side of the garment, or any section of said side. Likewise, the embodiment shown in Fig. 4 also comprises step 1005 that is cutting and/or modifying part of the combined image, to generate an improved image of graphic. Said cutting may be cropping the image to separate the graphic from the background and/or to separate the graphic from the borders/edges of the garment. Likewise, said modifying may be recoloring certain pixels in the image in order to remove visible features that do not correspond to the graphic that will be used later in the laser system. Finally, said modifying of the combined image may be changing the contrast or other properties of the combined image.

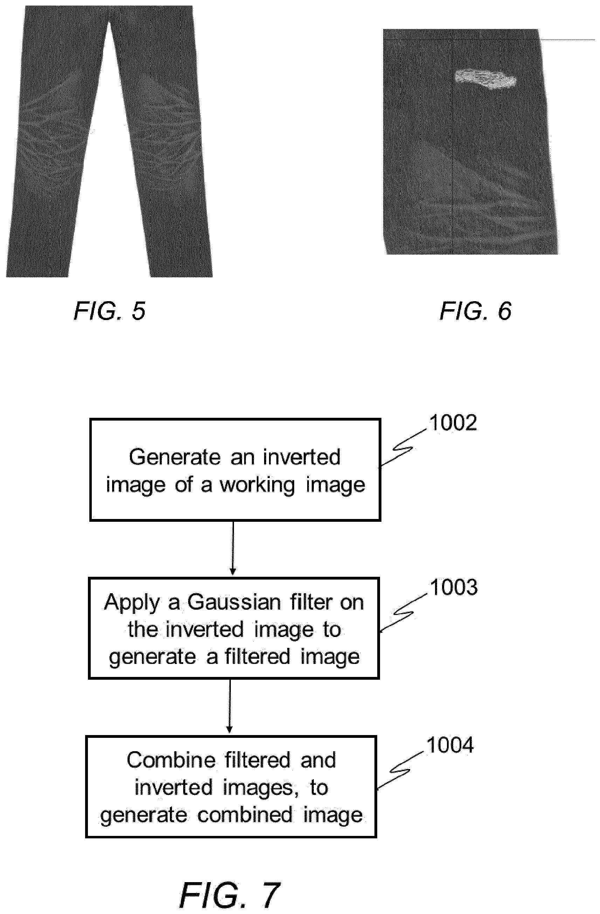

FIG. 5 and FIG. 6 show two examples of digital images showing garments, specifically denims, with visible features on their surface. The denim in FIG. 5 has a wear pattern that is lighter in color compared to the color of the rest of the denim fabric. FIG. shows part of a denim, and therefore is a non-limiting example of a digital partial image of the garment. In FIG. 6 there can be seen that the garment has a wear pattern and a hole/tear damage. The form of said damage can be part of the graphic to be extracted by means of the present invention.

FIG. 7 shows another preferred embodiment of the computer implemented method according to the invention, that comprises:

- in step 1002 generating an inverted image of the working image;
- in step 1003 applying a Gaussian filter on the inverted image to generate a filtered image;
- In step 1004 combine the filtered image with the inverted image to generate a combined image.

A non-limiting example of a laser system that comprises a data processing apparatus that can be equipped with the means for executing the method according to the invention is the FlexiPro system made by Jeanologia™.

While the foregoing is directed to embodiments of the present invention, other and further embodiments of the invention may be devised without departing from the basic scope thereof. For example, other aspects may be implemented in hardware or software or in a combination of hardware and software. Additionally, the software programs included as part of the invention may be embodied in a computer program product that includes a computer useable medium, for example, a readable memory device, such as a hard drive device, a flash memory device, a CD ROM, a DVD/ROM, or a computer diskette, having computer readable program code segments stored thereon. The computer readable medium can also include a communications link, either optical, wired, or wireless, having program code segments carried thereon as digital or analog signals.

**Claims**

1.  A computer implemented method for generating an image of a graphic for laser marking, comprising:

    - applying a color inversion on a working image of a textile garment, thereby generating an inverted image, the working image showing that the textile has a visible feature on its surface;
    - applying a Gaussian filter on the inverted image, thereby generating a filtered image;
    - combining the filtered image with the inverted image, thereby generating a combined image that comprises a graphic.

2.  A method according to claim 2, where the visible feature is a wear pattern, the graphic resembles the visible feature, and the graphic is to be marked on a work piece that comprises denim.

3.  A method according to claim 1 or 2, wherein the textile garment is a denim garment.

4.  A method according to any of the preceding claims, wherein combining the filtered image with the inverted image comprises applying a mathematical formula for calculating a value $f(A,B)$ of a color channel of the combined image, said formula being:

$$f(A,B) = \begin{cases} 2AB + A^2(1-2B), & if\ B < c \\ 2A(1-b) + \sqrt{A}(2B-1), & if\ B \geq c \end{cases}$$

wherein $c$ has a value of between a maximum value $c_{max}$ and a minimum value $c_{min}$, where $c_{max}$ defines a white color in the grayscale and $c_{min}$ defines a black color in the grayscale, $c$ preferably being $c_{max}/2$, $A$ is a value of a color channel of the inverted image and $B$ is a value of the corresponding color channel of the filtered image.

5. A method according to any of the preceding claims, wherein before applying the color inversion to the working image the method comprises generating the working image, and said generating comprises any of:

- converting a digital image of the textile garment, into the working image, the digital image showing that the textile has the visible feature on its surface; and/or
- combining a plurality of digital partial images of the textile garment, thereby generating the working image or the digital image of the textile garment.

6. A method according to any of the preceding claims, wherein applying a Gaussian filter on the inverted image comprises:

- rescaling the inverted image by applying a downscaling algorithm, thereby generating an intermediate image of reduced size compared to the inverted image;
- applying the Gaussian filter on the intermediate image, thereby generating an intermediate filtered image;
- rescaling the intermediate filtered image by applying an upscaling algorithm, thereby generating the filtered image, the latter having a size that is equal to the size of the inverted image.

7. A method according to claim 6, where the downscaling algorithm is an interpolation algorithm, and/or the upscaling algorithm is an interpolation algorithm, preferably bicubic algorithm.

8. A method according to any of the preceding claims, wherein the working image is a grayscale image.

9. A method according to any of the preceded claims, cropping the combined image to remove parts that do not represent the graphic, thereby generating an improved image that comprises the graphic.

10. A method according to any of the preceding claims, further comprising determining that at least one pixel of the combined image does not meet a specific condition that is met by other pixels; and separating from the rest of combined image said pixel that does not meet the specific condition, or changing the value of a color channel of said pixel that does not meet the specific condition, thereby generating an improved image that comprises the graphic.

11. A data processing apparatus comprising means for carrying out the method of any of claims 1-10.

12. A computer program comprising instructions which, when the program is executed by a computer, cause the computer to carry out the method of any of claims 1-10.

13. A computer-readable data carrier having stored thereon the computer program of claims 12.

14. A system for laser marking a graphic on a work piece, the system comprising a data processing apparatus that comprises means for carrying out the method of any of claims 1-10.

15. A method for generating a graphic for laser marking, comprising:

- applying a color inversion on a working image, thereby generating an inverted image;
- applying a Gaussian filter on the inverted image, thereby generating a filtered image;
- combining the filtered image with the inverted image, thereby generating a combined image that comprises a graphic.

*FIG. 1*

Convert a digital image of textile into a working image ⟋1001

Generate an inverted image of the working image ⟋1002

Apply a Gaussian filter on the inverted image to generate a filtered image ⟋1003

Combine filtered and inverted images, to generate combined image ⟋1004

*FIG. 2*

Generate an inverted
image of the working image

1002

Downscale the working
image, to generate
intermediate image

1003a

1003

Apply Gaussian filter on
intermediate image, to
generate intermediate
filtered image

1003b

Upscale intermediate
filtered image

1003c

Combine filtered and
inverted images, to
generate combined image

1004

FIG. 3

Combine a plurality of digital partial images of garment, to generate a digital image — 1000

Convert the digital image into a working image — 1001

Generate an inverted image of the working image — 1002

Apply a Gaussian filter on the inverted image to generate a filtered image — 1003

Combine filtered and inverted images, to generate combined image — 1004

Cut or modify part of the combined image, to generate an improved image of graphic. — 1005

*FIG. 4*

FIG. 5

FIG. 6

Generate an inverted image of a working image
1002

Apply a Gaussian filter on the inverted image to generate a filtered image
1003

Combine filtered and inverted images, to generate combined image
1004

FIG. 7

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y<br>A | CN 109 035 377 A (GUANGZHOU PUHAN TECH CO LTD) 18 December 2018 (2018-12-18)<br>* paragraph [0002] *<br>* paragraph [0012] - paragraph [0013] *<br>* paragraph [0073] - paragraph [0075] *<br>* figure 10 *<br>----- | 1,5-15<br><br>2,3<br>4 | INV.<br>G06T5/00 |
| Y | US 2019/345658 A1 (CARBONELL MADERN JOSEP MARIA [ES] ET AL)<br>14 November 2019 (2019-11-14)<br>* paragraph [0004] - paragraph [0008] *<br>----- | 2,3 | |

TECHNICAL FIELDS
SEARCHED (IPC)

G06T

The present search report has been drawn up for all claims

| Place of search | Date of completion of the search | Examiner |
|---|---|---|
| Munich | 1 July 2021 | Werling, Alexander |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 21 38 2081

This annex lists the patent family members relating to the patent documents cited in the above-mentioned European search report.
The members are as contained in the European Patent Office EDP file on
The European Patent Office is in no way liable for these particulars which are merely given for the purpose of information.

01-07-2021

| Patent document cited in search report | | Publication date | Patent family member(s) | | Publication date |
|---|---|---|---|---|---|
| CN 109035377 | A | 18-12-2018 | NONE | | |
| US 2019345658 | A1 | 14-11-2019 | CN | 110382764 A | 25-10-2019 |
| | | | EP | 3346038 A1 | 11-07-2018 |
| | | | ES | 2729771 T3 | 06-11-2019 |
| | | | US | 2019345658 A1 | 14-11-2019 |
| | | | WO | 2018127838 A1 | 12-07-2018 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20180066395 A1